# EUROPÄISCHE PATENTSCHRIFT

(11) **EP 3 061 213 B1**
(45) Veröffentlichungstag und Bekanntmachung des Hinweises auf die Patenterteilung: **13.06.2018**
(21) Anmeldenummer: 14805472.9
(22) Anmeldetag: 15.10.2014
(51) Int. Cl.: H04L 12/40, H04L 12/42, H04L 12/44

(54) **VERFAHREN ZUR ÜBERTRAGUNG VON NACHRICHTEN IN EINEM COMPUTERNETZWERK SOWIE COMPUTERNETZWERK**
METHOD FOR TRANSMITTING MESSAGES IN A COMPUTER NETWORK, AND COMPUTER NETWORK
PROCÉDÉ DE TRANSMISSION DE MESSAGES DANS UN RÉSEAU INFORMATIQUE ET RÉSEAU INFORMATIQUE

(30) Priorität: 25.10.2013 AT 506912013
(43) Veröffentlichungstag der Anmeldung: 31.08.2016
(73) Patentinhaber: FTS Computertechnik GmbH, 1040 Wien (AT)
(72) Erfinder: STEINER, Wilfried, A-1040 Wien (AT); BAUER, Günther, A-1040 Wien (AT)
(74) Vertreter: Patentanwaltskanzlei Matschnig & Forsthuber OG
(86) Internationale Anmeldenummer: PCT/AT2014/050247
(87) Internationale Veröffentlichungsnummer: WO 2015/058224

(56) Entgegenhaltungen:
- EP-A2- 2 001 170
- WO-A1-2013/041309
- GB-A- 2 450 520
- US-A1- 2010 309 777

## Beschreibung

Die Erfindung betrifft ein Verfahren zur Übertragung von Nachrichten in einem Computernetzwerk, wobei das Computernetzwerk Rechenknoten umfasst, welche Rechenkoten über zumindest einen Sternkoppler und/oder zumindest ein Multi-Hop Netzwerk miteinander verbunden sind, wobei jeder Rechenkoten über zumindest eine Kommunikationsleitung mit dem zumindest einen Sternkoppler und/oder dem zumindest einen Multi-Hop Netzwerk verbunden ist, und wobei die Rechenknoten untereinander und mit dem zumindest einen Sternkoppler und/oder dem zumindest einen Multi-Hop Netzwerk Ethernet-Nachrichten austauschen, wobei
in einer Menge von Komponenten, welche ausgewählt sind aus jenen Komponenten, welche von dem Computernetzwerk umfasst sind, das sind Rechenknoten und/oder Sternkoppler und/oder Multi-Hop-Netzwerke, wobei die Menge zwei oder mehr solcher Komponenten umfasst, jene Komponenten der Menge, welche direkt miteinander verbunden sind, jeweils durch zwei oder mehr Kommunikationsleitungen direkt miteinander verbunden sind, und
sendende Komponenten der Menge an Komponenten zumindest einen Teil der zu versendenden Ethernet Nachrichten an zumindest zwei der zwei oder mehreren Kommunikationsleitungen versendet.

Weiters betrifft die Erfindung ein Computernetzwerk, insbesondere ein verteiltes Echtzeit-Computernetzwerk zur Übertragung von Nachrichten, wobei das Computernetzwerk Rechenknoten umfasst, welche Rechenkoten über zumindest einen Sternkoppler und/oder zumindest ein Multi-Hop Netzwerk miteinander verbunden sind, wobei jeder Rechenknoten über zumindest eine Kommunikationsleitung mit dem zumindest einen Sternkoppler und/oder dem zumindest einen Multi-Hop Netzwerk verbunden ist, und wobei die Rechenknoten untereinander und mit dem zumindest einen Sternkoppler und/oder dem zumindest einen Multi-Hop Netzwerk Ethernet-Nachrichten austauschen, wobei
in einer Menge von Komponenten, welche ausgewählt sind aus jenen Komponenten, welche von dem Computernetzwerk umfasst sind, das sind Rechenknoten und/oder Sternkoppler und/oder Multi-Hop-Netzwerke, wobei die Menge zwei oder mehr solcher Komponenten umfasst, jene Komponenten der Menge, welche direkt miteinander verbunden sind, jeweils durch zwei oder mehr Kommunikationsleitungen direkt miteinander verbunden sind, und
sendende Komponenten der Menge an Komponenten zumindest einen Teil der zu versendenden Ethernet Nachrichten an zumindest zwei der zwei oder mehreren Kommunikationsleitungen versendet.

Bei dem Computernetzwerk handelt es sich beispielsweise um ein zeitgesteuertes Ethernet-Computernetzwerk.

Die vorliegende Erfindung liegt im Bereich der Computertechnik. Sie beschreibt ein innovatives Verfahren und unterstützende Hardware, um ein Ethernet Netzwerk für sicherheitskritische Anwendungen zu verwenden.

Insbesondere liegt die Erfindung im Bereich verteilter Echtzeitsysteme, wobei ein solches Echtzeitsystem aus zwei Arten von aktiven Komponenten besteht: Rechenknoten und Sternkopplern. Rechenknoten exekutieren Funktionen wie zum Beispiel, das Messen von Eigenschaften physikalischer Prozesse mittels geeigneter Sensorik, die Berechnung von Stellgrößen oder die Aktivierung von Aktuatoren, wie zum Beispiel Ventilen. Rechenknoten sind mit anderen Rechenknoten und/oder Sternkopplern mittels bidirektionaler Leitungen verbunden. Des Weiteren können auch Sternkoppler durch bidirektionale Leitungen miteinander verbunden sein. Der Informationsaustausch zwischen Komponenten funktioniert Nachrichten-orientiert, und in der folgenden Beschreibung gehen wir davon aus, dass der Informationsaustausch Ethernet Nachrichten verwendet. Nachrichten können unterschiedliche Identitäten haben und alle Nachrichten mit der gleichen Identität bilden einen "Nachrichten Fluss".

Echtzeitsysteme wie oben beschrieben finden unter anderem Anwendung in sicherheitskritischen Systemen wie zum Beispiel zur Steuerung eines Flugzeugs. In solchen Systemen muss sichergestellt werden, dass das Netzwerk auch funktioniert, wenn einzelne Komponenten, also Rechenknoten oder Sternkoppler fehlerhaft werden. Diese Problematik wird im Forschungs- und Entwicklungsbereich als Fehlertoleranz bezeichnet.

Die WO-A1-2013/041309 offenbart ein Verfahren zur Übertragung von Daten auf eine sichere Art und Weise in einem lokalen Netzwerk.

Es ist eine Aufgabe der Erfindung, eine Lösung dafür anzugeben, wie ein Ethernet-Netzwerk sicherheitskritische Aufgaben erfüllen kann und die Operabilität des Netzwerkes auch im Fehlerfall gegeben ist.

Diese Aufgabe wird mit einem eingangs genannten Verfahren sowie mit einem eingangs erwähnten Computernetzwert dadurch gelöst, dass erfindungsgemäß empfangende Komponenten der Menge an Komponenten zumindest einen Teil der Ethernet Nachrichten, die über die zwei oder mehr Kommunikationsleitungen empfangen werden, nur dann akzeptiert und/oder weiterleitet, wenn zumindest zwei idente Nachrichten über zumindest zwei unterschiedliche Kommunikationsleitungen empfangen werden.

Die vorliegende Erfindung beschreibt, wie durch geeignete Maßnahmen, im Speziellen durch Verwendung mehrere redundanter Teile und deren Verschaltung, ein Ethernet Netzwerk derart ausgelegt werden kann, dass es sicherheitskritisch Aufgaben erfüllen kann und die Operabilität des Netzwerks auch im Fehlerfall gegeben ist.

Bei der Menge an Komponenten kann es sich z.B. um genau zwei Komponenten, etwa einen Sternkoppler und einen Rechenknoten handeln, es kann diese Menge aber auch von allen Komponenten (in Form von Rechenkoten, Sternkopplern und/oder Multi-Hop Netzwerken, welche Bestandteil des Computernetzwerkes sind oder dieses bilden), welche von dem Computernetzwerk umfasst sind, gebildet sein.

Bevorzugte Ausführungsformen des erfindungsgemäßen Verfahrens und des erfindungsgemäßen Computernetzwerkes, welche für sich alleine oder in beliebiger Kombination miteinander realisiert sein können, sind im Folgenden beschrieben:
- die sendenden Komponenten der Menge an Komponenten und/oder die empfangende Komponenten der Menge an Komponenten bestehen jeweils aus zwei oder mehreren fault-containment Einheiten;
- in den sendenden und/oder empfangenden Komponenten der Menge an Komponenten sind die fault-containment Einheiten derart gewählt, dass sich je Komponente unterschiedliche MAC Schichten in unterschiedlichen fault-containment Einheiten befinden, wobei unterschiedliche MAC Schichten einer Komponente strukturell identisch sind;
- in den sendenden und/oder empfangenden Komponenten der zumindest einen Menge an Komponenten sind die fault-containment Einheiten derart gewählt, dass je Komponente jede MAC Schicht genau einer von zwei fault-containment Einheiten zugewiesen ist;
- in den sendenden Komponenten der Menge an Komponenten sind die fault-containment Einheiten derart gewählt, dass sich je Komponente unterschiedliche PHY Schichten in unterschiedlichen fault-containment Einheiten befinden;
- in den sendenden und/oder empfangenden Komponenten der Menge an Komponenten sind die fault-containment Einheiten derart gewählt, dass je Komponente jede PHY Schicht genau einer von zwei fault-containment Einheiten zugewiesen wird;
- in den sendenden und/oder empfangenden Komponenten der Menge an Komponenten sind die fault-containment Einheiten derart gewählt, dass jede MAC Schicht und/oder PHY Schicht genau einer von zwei fault-containment Einheiten zugewiesen ist;
- eine empfangende Komponente der Menge an Komponenten leitet nur eine der identen Nachrichten, welche die empfangende Komponente an den zumindest zwei unterschiedlichen Kommunikationsleitungen empfangen hat, weiter;
- zumindest ein Teil der Ethernet Nachrichten, gegebenenfalls auch alle, zeitgesteuert von den Rechenknoten versendet wird;
- zumindest ein Teil der Ethernet Nachrichten wird zeitgesteuert von den Sternkopplern weitergeleitet;
- der SAE AS602 Standard oder ein darauf aufbauender oder nachfolgender Standard wird verwendet, um zeitgesteuert zu kommunizieren;
- der IEEE 802.1AS Standard oder ein darauf aufbauender oder nachfolgender Standard wird verwendet, um zeitgesteuert zu kommunizieren;
- der IEEE 1588 Standard oder ein darauf aufbauender oder nachfolgender Standard wird verwendet, um zeitgesteuert zu kommunizieren;
- die Komponenten der Menge an Komponenten verwenden die zwei oder mehreren Kommunikationsleitungen zu Zeitpunkten, zu denen keine gleichen Ethernet Nachrichten über zwei oder mehrere Kommunikationsleitungen übertragen werden, für die Übertragung von unterschiedlichen Ethernet Nachrichten;
- ein Link Aggregation Verfahren laut dem Standard IEEE 802.1AX oder einem darauf aufbauenden oder nachfolgenden Standard wird verwendet, um unterschiedliche Nachrichten über die zwei oder mehr Kommunikationsleitungen zu versenden;
- die Menge an Komponenten beinhaltet ausschließlich Sternkoppler,. d.h. zwei oder mehrere Sternkoppler;
- die error-containment Einheiten sind derart gewählt, dass jede Komponente für sich eine error-containment Einheit bildet;
- die error-containment Einheiten sind derart gewählt, dass jeder Sternkoppler eine error-containment Einheit bildet;
- die error-containment Einheiten sind derart gewählt, dass zumindest ein Rechenknoten gemeinsam mit jeweils zumindest einem Sternkoppler eine error-containment Einheit bilden;
- die error-containment Einheiten sind derart gewählt, dass jeweils genau ein Rechenknoten gemeinsam mit genau einem Sternkoppler je eine error-containment Einheit bildet;
- jede Komponente der Menge an Komponenten ist eine sendende Komponente, eine empfangende Komponente oder sowohl eine sendende als auch eine empfangende Komponente.

Ein zentrales Element der Erfindung ist die geeignete Wahl von "*fault-containment"* Einheiten und *"error-containment"* Einheiten. Eine fault-containment Einheit wird während der Entwicklung eines sicherheitskritischen Systems festgelegt und klassifiziert jene Teile eines Systems, von welchen im Falle eines Fehlers angenommen wird, dass sie zur Gänze ausfallen. Ein Beispiel einer fault-containment Einheit ist ein Computerchip. Eine charakterisierende Eigenschaft einer fault-containment Einheit ist der *Ausfallsmodus.* Der Ausfallsmodus einer fault-containment Einheit beschreibt, wie sich die Einheit im Fehlerfall verhalten kann. Im Fall des Computerchips ist ein Beispiel eines Ausfallmodus: *fail-silent,* was bedeutet, dass der Computerchip im Fehlerfall keine Signale mehr an seinen Outputs generiert. Da eine genaue Beschreibung des Ausfallmodus schwierig ist wird in sicherheits-kritischen Systemen oft eine pessimistische Annahme getroffen. Eine pessimistische Annahme eines Ausfallmodus ist zum Beispiel *"beliebig fehlerhaft",* was bedeutet, dass der Computerchip an seinen Interfaces beliebige Signale generieren kann.

Eine error-containment Einheit wird ebenfalls während der Entwicklung eines sicherheitskritischen Systems festgelegt und beschreibt, wie fault-containment Einheiten derart verschaltet werden können, dass der Ausfallsmodus der error-containment Einheit weniger kritisch, d.h. gutartiger ist als der Ausfallsmodus der fault-containment Einheiten, aus welcher oder welchen die error-containment Einheit besteht. Ein Beispiel einer error-containment Einheit besteht aus zwei fault-containment Einheiten (zum Beispiel zwei Computerchips), wobei beide fault-containment Einheiten für sich beliebig fehlerhaft ausfallen können. Die error-containment Einheit verschaltet nun die beiden fault-containment Einheiten derart, sodass sie sich gegenseitig überwachen. Wird eine der fault-containment Einheiten fehlerhaft und beginnt, fehlerhafte Signale zu generieren, so erkennt dies die jeweils andere fault-containment Einheit und schaltet sowohl die fehlerhafte (fault-containment) Einheit als auch sich selbst ab (zum Beispiel über eine gemeinsame Stromversorgung). Aus diesem Verhalten der fault-containment Einheiten resultiert ein gutartiger Ausfallsmodus der error-containment Einheit, nämlich fail-silent. Der Vollständigkeit halber sei erwähnt, dass eine der Grundannahmen, die beim Design von error-containment Einheiten getroffen werden muss, die Annahme ausreichend unabhängigen Ausfalls von fault-containment Einheiten ist. In obigem Beispiel wird z.B. davon ausgegangen, dass zu jedem Zeitpunkt nur jeweils eine der fault-containment Einheiten fehlerhaft wird.

Die vorliegende Erfindung beschreibt, wie in einem Ethernet-basierten Netzwerk fault-containment und error-containment sinnvoll gewählt werden, sodass das verteilte Echtzeitsystem in sicherheitskritischen Anwendungen eingesetzt werden kann. Weiters beschreibt die Erfindung, wie die fault-containment Einheiten zielführend miteinander verschaltet werden können. Außerdem wird eine Realisierung der Erfindung beschrieben, in der die Ethernet Nachrichten zeitgesteuert verschickt werden, wodurch der Implementierungsaufwand der Erfindung minimal gehalten wird.

In einem Ethernet Netzwerk werden die sogenannte MAC (media access) Schicht und die sogenannte PHY (physical) Schicht voneinander unterschieden. Beim Versenden von Ethernet Nachrichten ist die MAC Schicht für die Aufbereitung der zu verschickenden Information zuständig und liefert die Daten über ein standardisiertes Interface an die PHY Schicht, welche die Nachrichten dann über eine Kommunikationsleitung versendet. Diese standardisierten Interfaces sind zum Beispiel "MII" für 100 Mbit/Sec Ethernet oder "GMII" für 1 Gbit/Sec Ethernet. Beim Empfang bekommt der PHY die Daten von der Kommunikationsleitung und bereitet sie dem Interface konform auf und übergibt die Daten an die MAC Schicht. Die MAC Schicht bekommt und liefert die Daten entweder von/zu einer übergeordneten Applikationsschicht (APP) oder von/zu Funktionen, die direkt in der MAC Schicht implementiert sind. In der Praxis können sowohl jede dieser Schichten (APP, MAC, PHY) in einem eigenen Computerchip realisiert werden als auch mehrere Schichten in einem gemeinsamen Computerchip realisiert werden. Da typischerweise ein Computerchip als fault-containment Einheit angenommen wird, ergibt sich aus der getrennten oder gemeinsamen Realisierung der Schichten in einem Computerchip, dass eine oder mehrere Schichten für sich eine fault-containment Einheit bilden.

Im Folgenden ist die Erfindung an Hand der Zeichnung an Hand einer beispielhaften Realisierung näher erörtert. Es zeigt
Fig.1 ein Beispiel eines Ethernet Netzwerks, welches zeitgesteuerte Kommunikation implementiert, in dem Rechenknoten 101-105 mittels bi-direktionaler Kommunikationsleitungen 110 mit einem Sternkoppler 201 verbunden sind,
Fig. 2 ein weiteres Beispiel eines Ethernet Netzwerkes,
Fig. 3 ein Beispiel eines Ethernet Netzwerks, welches zeitgesteuerte Kommunikation implementiert, in dem Rechenknoten 101-105 mittels redundanten bi-direktionaler Kommunikationsleitungen 110, 120 mit redundanten Sternkopplern 201, 202 verbunden sind,
Fig. 4 ein Beispiel einer Kommunikation zwischen einem Rechenknoten und einem Sternkoppler dargestellt,
Fig. 5 das Netzwerk auf Figur 1 unter teilweiser Verwendung von bidirektionalen Kommunikationsleitungen wie in Figur 4 dargestellt,
Fig. 6 das Netzwerk auf Figur 2 unter teilweiser Verwendung von bidirektionalen Kommunikationsleitungen wie in Figur 4 dargestellt,
Fig. 7 ein Beispiel einer Kommunikation zwischen einem Rechenknoten und einem Sternkoppler sowie interne Details des Rechenknotens und des Sternkopplers,
Fig. 8 ein Ethernet Netzwerk ähnlich dem in Figur 5 dargestellten, allerdings mit lediglich vier Rechenknoten, sowie interne Details der Rechenknoten und des Sternkopplers entsprechend Figur 7,
Fig. 9 ein Ethernet Netzwerk ähnlich dem in Figur 6 dargestellten, allerdings mit lediglich zwei Rechenknoten und zwei Sternkopplern, sowie interne Details der Rechenknoten und der Sternkoppler entsprechend Figur 7,
Fig. 10 ein Flussdiagramm, welches zeitgesteuerte Kommunikation illustriert, und
Fig. 11 ein weiteres beispielhaftes Flussdiagramm.

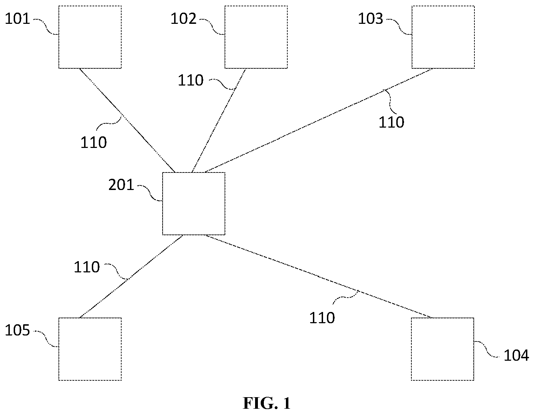

Fig. 1 zeigt ein Beispiel eines Ethernet Netzwerks, in dem Rechenknoten 101 - 105 mittels bidirektionaler Kommunikationsleitungen 110 mit einem Sternkoppler 201 verbunden sind. Die Rechenknoten 101 - 105 tauschen Ethernet Nachrichten miteinander aus, indem sie diese an den Sternkoppler 201 schicken, und dieser die Nachrichten an die entsprechenden Empfänger weiterleitet. Des Weiteren kann ein Sternkoppler 201 auch selbst Ethernet Nachrichten generieren und an Rechenknoten 101 -105 versenden.

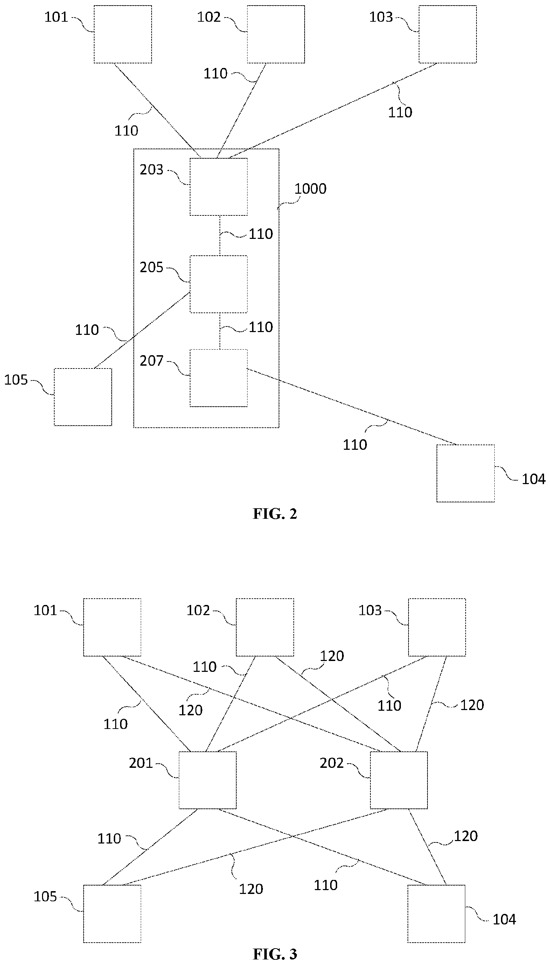

In Fig. 2 dargestellt ist, dass auch mehrere Sternkoppler 201 miteinander verbunden werden können und Rechenknoten 101 - 105 nur mit einer Teilmenge dieser Sternkoppler 203, 205, 207 verbunden wird. Die Kommunikation zwischen zwei Rechenknoten kann dann auch über zwei oder mehr Sternkoppler 203, 205, 207 erfolgen. Solche Netzwerkstrukturen werden Multi-Hop Netzwerke 1000 genannt. In der folgenden Beschreibung wird nicht explizit auf Multi-Hop Netzwerke eingegangen, es ist aber Stand der Technik, dass einzelne Sternkoppler 201 (Fig. 1) durch ein Multi-Hop Netzwerk 1000 ersetzt werden können (Fig. 2).

In Fig. 3 ist ein Beispiel eines Ethernet Netzwerks dargestellt, in dem Rechenknoten 101 - 105 mittels redundanter bi-direktionaler Kommunikationsleitungen 110, 120 mit redundanten Sternkopplern 201, 202 verbunden sind. Rechenknoten können nun über beide Sternkoppler 201, 202 miteinander, auch gleichzeitig, kommunizieren. Das heißt, dass die Redundanz in diesem Netzwerk den Ausfall einzelner Komponenten toleriert. Wenn zum Beispiel Rechenknoten 101 mit Rechenknoten 102 kommunizieren möchte so kann er Nachrichten sowohl an den Sternkoppler 201 als auch an den Sternkoppler 202 schicken. Im fehlerfreien Fall leiten dann beide Sternkoppler 201 und 202 die Nachrichten an den Rechenknoten 102 weiter. Wird jedoch einer der beiden Sternkoppler 201 oder 202 fehlerhaft, so ist jedenfalls garantiert, dass der jeweils nicht fehlerhafte Sternkoppler 201 oder 202 die Nachrichten des Rechenknoten 101 zuverlässig an den Rechenknoten 202 weiterleitet.

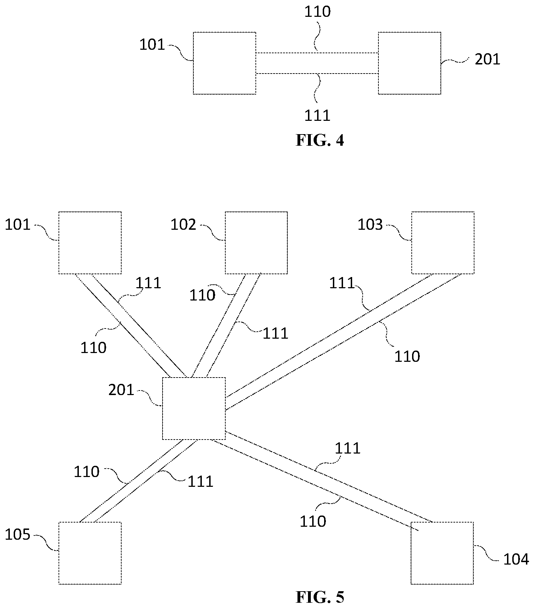

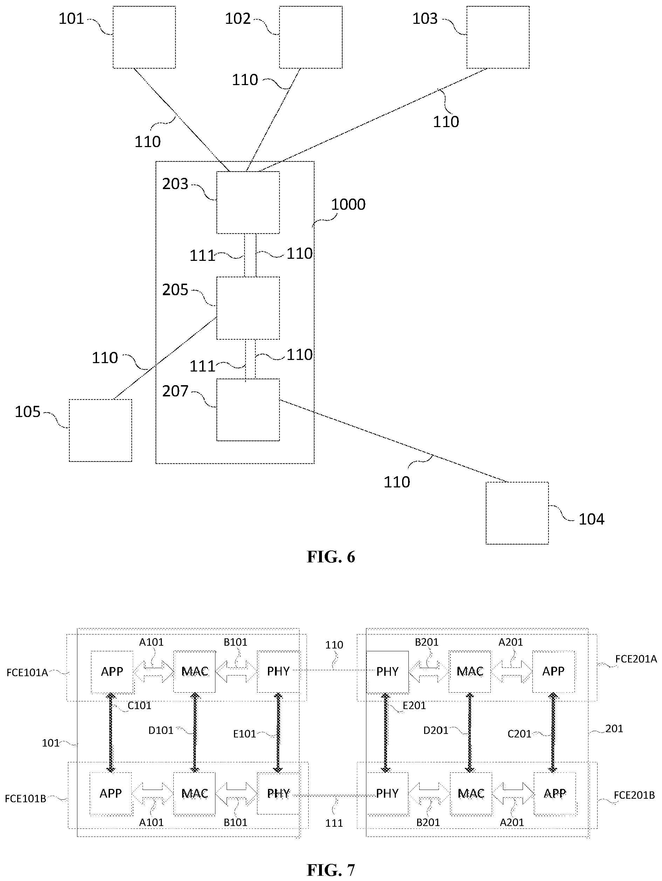

In Fig. 4 ist am Beispiel der Kommunikation zwischen Rechenknoten 101 und Sternkoppler 201 dargestellt, dass Rechenknoten 101 - 105 und Sternkoppler 201, 202 auch direkt mit mehreren bidirektionalen Kommunikationsleitungen 110,111 verbunden sein können. Fig. 5 und Fig. 6 zeigen dementsprechend, dass alle oder nur ein Teil der aktiven Komponenten 101 - 105, 201, 203, 205, 207 mittels mehrerer bidirektionaler Kommunikationsleitungen 110,111 verbunden sein können.

Fig. 7 zeigt am Beispiel der Kommunikation zwischen Rechenknoten 101 und Sternkoppler 201 interne Details des Senders, in diesem Fall Rechenknoten 101, und des Empfängers, in diesem Fall Sternkoppler 201, von Ethernet Nachrichten. Es sind sowohl in Rechenknoten 101 und Sternkoppler 201 die Kommunikationsschichten APP, MAC und PHY dargestellt, wobei die APP Schicht optional ist. Darüberhinausgehend sind die Schichten sowohl im Sender als auch im Empfänger doppelt dargestellt (oben und unten). Will eine Applikation eine Nachricht von Rechenknoten 101 an den Sternkoppler 201 versenden, so schickt die eine der APP Schichten (oder beide APP Schichten) im Rechenknoten 101 die Daten an die MAC Schicht über das Interface A101 und diese wiederum an die PHY Schicht, über das Interface B101. Die PHY Schichten im Sender 101 generieren Ethernet Nachrichten die an eine oder beide Kommunikationsleitungen 110, 111 versendet werden. Im Empfänger 201 nimmt eine oder mehrere PHY Schichten die Ethernet Nachricht oder Nachrichten entgegen und leiteten diese über die Interfaces B201 und A201 an die MAC und die APP Schichten weiter.

In Fig. 7 sind des Weiteren sowohl im Sender 101 als auch im Empfänger 201 optionale Abhängigkeiten C101, D101, E101, C201, D201, E201 zwischen den Schichten oben und unten eingezeichnet.

Im Sender 101 beschreibt die optionale Abhängigkeit C101 einen Informationsaustausch zwischen der APP Schicht oben und unten. Die optionale Abhängigkeit C101 kann zu einer Veränderung der Daten an den Interfaces A101 führen. Zum Beispiel können beide APP Schichten (unten und oben) im Sender 101 die gleiche Applikation ausführen, was dazu führt, dass im fehlerfreien Fall die gleichen Daten am Interface A101 (oben und unten) generiert werden. Die Abhängigkeit C101 kann jetzt von beiden APP Schichten im Sender 101 verwendet werden, um zu überprüfen, ob auch wirklich beide APP Schichten (unten und oben) die gleichen Daten am Interface A101 generieren. Im Fehlerfall kann es sein, dass die APP Schichten unterschiedliche Daten am Interface A101 generieren. Der Informationsaustausch der Abhängigkeit C101 informiert also die beiden APP Schichten im Sender 101 von etwaigen Unterschieden am Interface A101 (unten und oben). Jede APP Schicht für sich kann jetzt geeignete Maßnahmen treffen um die Daten am Interface A101 zu verändern. Diese Maßnahmen können sogar soweit führen, dass im Falle der Detektion von Inkonsistenz in einer der APP Schichten (unten oder oben) die detektierende APP auch die Daten am Interface A101 der jeweils anderen APP verändern kann. Dies kann zum Beispiel durch ein Abschalten, d.h. z.B. durch Trennung von der Stromversorgung des Senders 101 erfolgen, wobei beide APP Schichten (oben und unten) diesbezüglich ein Kommando an die Stromversorgung schicken können.

Analog zur Abhängigkeit C101 (Informationsaustausch und potentielle Änderung der Daten am Interface A101 unten und oben) der APP Schichten unten und oben im Sender 101 kann auch die MAC Schicht (unten und oben) eine Abhängigkeit D101 realisieren, mit entsprechendem Informationsaustausch zwischen der MAC Schicht unten und oben und potentieller Änderung der Daten am Interface B101 unten und oben.

Analog zur Abhängigkeit C101 (Informationsaustausch und potentielle Änderung der Daten am Interface A101 unten und oben) der APP Schichten unten und oben im Sender 101 kann auch die PHY Schicht (unten und oben) eine Abhängigkeit E101 realisieren, mit entsprechendem Informationsaustausch zwischen der PHY Schicht unten und oben und potentieller Änderung der Daten, die als Ethernet Nachrichten über die Kommunikationsleitungen 101 und 111 versendet werden.

Im Empfänger 201 beschreibt die optionale Abhängigkeit E201 einen Informationsaustausch zwischen der PHY Schicht oben und unten. Die optionale Abhängigkeit E201 kann zu einer Veränderung der Daten an den Interfaces B201 führen. Zum Beispiel können beide PHY Schichten (unten und oben) im Empfänger 201 die gleichen Ethernet Nachrichten von den Kommunikationsleitungen 110 und 111 empfangen, was dazu führt, dass im fehlerfreien Fall die gleichen Daten am Interface B201 (oben und unten) generiert werden. Die Abhängigkeit E201 kann jetzt von beiden PHY Schichten im Empfänger 201 verwendet werden, um zu überprüfen, ob auch wirklich beide PHY Schichten (unten und oben) die gleichen Daten von den Kommunikationsleitungen 110 und 111 empfangen. Im Fehlerfall kann es sein, dass die PHY Schichten unterschiedliche Daten von den Kommunikationsleitungen 110 und 111 empfangen. Der Informationsaustausch der Abhängigkeit E201 informiert also die beiden PHY Schichten im Empfänger 201 von etwaigen Unterschieden an den Kommunikationsleitungen 110 und 111 (unten und oben). Jede PHY Schicht für sich kann jetzt geeignete Maßnahmen treffen, um die Daten am Interface B201 zu verändern. Zum Beispiel können die beiden PHY Schichten (unten und oben) im Empfänger 201 bei Inkonsistenz der Ethernet Nachrichten, die von den Kommunikationsleitungen 110 und 111 empfangen wurden, jene Daten, die den Ethernet Nachrichten entsprechen, nicht an die Interfaces B201 weiterleiten und damit wieder eine konsistente Sicht am Interface B201 zu den MAC Schichten oben und unten gewährleisten.

Alternativ oder zusätzlich zur Abhängigkeit E201 kann die Abhängigkeit D201 realisiert werden, die analog zur Abhängigkeit E201 den Informationsaustausch und potentielle Veränderung der Daten am Interface A201 der beiden MAC Schichten (unten und oben) im Empfänger 201 darstellt. Wird die Abhängigkeit E201 nicht implementiert, so kann die MAC Schicht (unten und oben) über die Abhängigkeit D201 erkennen, wenn an den Kommunikationsleitungen 110, 111 unterschiedliche Ethernet Frames empfangen werden. In diesem Fall können die MAC Schichten (unten und oben) die Weiterleitung der Daten, die den Ethernet Frames entsprechen, am Interface A201 unterbinden und damit eine konsistente Sicht in der Weiterleitung der Daten sicherstellen.

Alternativ oder zusätzlich zu den Abhängigkeiten E201 und D201 kann auch eine Abhängigkeit C201 zwischen den APP Schichten (unten und oben) analog zu den Abhängigkeiten E201 und D201 realisiert werden. D.h., die APP Schichten können über die Abhängigkeit C201 erkennen, ob beide APP Schichten die gleichen Daten über das Interface A201 empfangen haben und zum Beispiel entscheiden, dass die Daten nur verwendet werden, wenn die Daten ident sind.

In Fig. 7 sind des Weiteren beispielsweise fault-containment Einheiten FCE101A, FCE101B, FCE201A, FCE201B dargestellt. Beim Systemdesign wird davon ausgegangen, dass der Sender 101 und der Empfänger 201 jeweils zumindest zwei fault-containment Einheiten implementieren und zumindest die beiden MAC und PHY Schichten (oben und unten) sowohl in Sender 101 als auch in Empfänger 201 in unterschiedlichen fault-containment Einheiten platziert sind.

In Fig. 7 bilden somit sowohl der Sender 101 als auch der Empfänger 201 jeweils für sich eine error-containment Einheit.

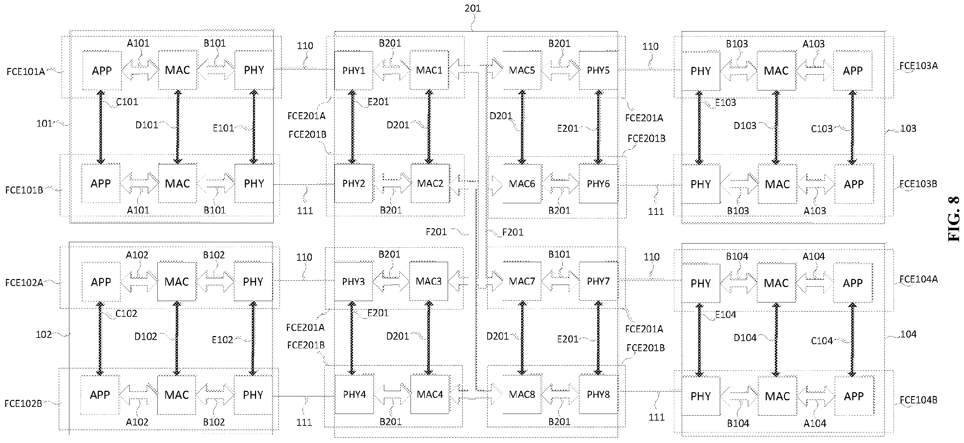

In Fig. 8 ist beispielhaft ein Ethernet Netzwerk ähnlich dem in Fig. 5 dargestellten, allerdings mit lediglich vier Rechenknoten 101-104 gezeigt. Des Weiteren sind interne Details der Rechenknoten 101-104 und des Sternkopplers 201 entsprechend Fig. 7 dargestellt. Wie dargestellt realisiert der Sternkoppler 201 in diesem Beispiel mehrere PHY Schichten PHY1-PHY8 und mehrere MAC Schichten MAC1-MAC8. Ethernet Frames (Ethernet Nachrichten) der Rechenknoten werden von den PHY Schichten von den Kommunikationsleitungen 110, 111 empfangen und über die Interfaces B201 an die MAC Schichten MAC1-MAC8 übertragen. Die MAC Schichten MAC1-MAC8 leiten dann die Daten untereinander nach definierten Weiterleitungsregeln F201 weiter. Zur Realisierung der Weiterleitungsregeln F201 können sowohl ein, zwei oder mehrere zentrale Speicherverwaltungen verwendet werden als auch lokale Speicherverwaltungen bei den jeweiligen MAC Schichten MAC1-MAC8.

Wie unter Fig. 7 bereits beschrieben können Abhängigkeiten D201, E201 zwischen PHY Schichten PHY1-PHY8 und MAC Schichten MAC1-MAC8 implementiert werden, die entscheiden, ob Ethernet Frames, die von den Kommunikationsleitungen 110, 111 empfangen oder über die Interfaces B201 an die MAC Schichten MAC1-MAC8 weitergereicht werden, an andere MAC Schichten MAC1-MAC8 weitergeleitet oder verworfen werden.

Des Weiteren zeigt Fig. 8 auch vier Rechenknoten 101-104, die über jeweils zwei Kommunikationsleitungen 110, 111 mit dem Sternkoppler 201 verbunden sind. Für jeden der vier Rechenknoten 101-104 ist auch ein Teil der inneren Struktur dargestellt wie unter Fig. 7 beschrieben. D.h.,
- beim Senden von Daten können die Rechenknoten die Abhängigkeiten C101-C104, D101-D104, E101-E104 implementieren, die entscheiden, ob Daten letztendlich in Form von Ethernet Nachrichten an die Kommunikationsleitungen 110 und 111 versendet werden;
- beim Empfangen von Daten von Ethernet Nachrichten von den Kommunikationsleitungen 110 und 111 können die Rechenknoten die Abhängigkeiten C101-C104, D101-D104, E101-E104 implementieren, die entscheiden, ob Daten in den PHY, MAC, und/oder APP Schichten verwendet werden oder verworfen werden.

Des Weiteren zeigt Fig. 8 auch fault-containment Einheiten FCE101A, FCE101B, FCE102A, FCE102B, FCE103A, FCE103B, FCE104A, FCE104B, FCE201A, FCE201B. Die Rechenknoten 101-104 und der Sternkoppler 201 bilden entsprechend jeweils für sich eine error-containment Einheit.

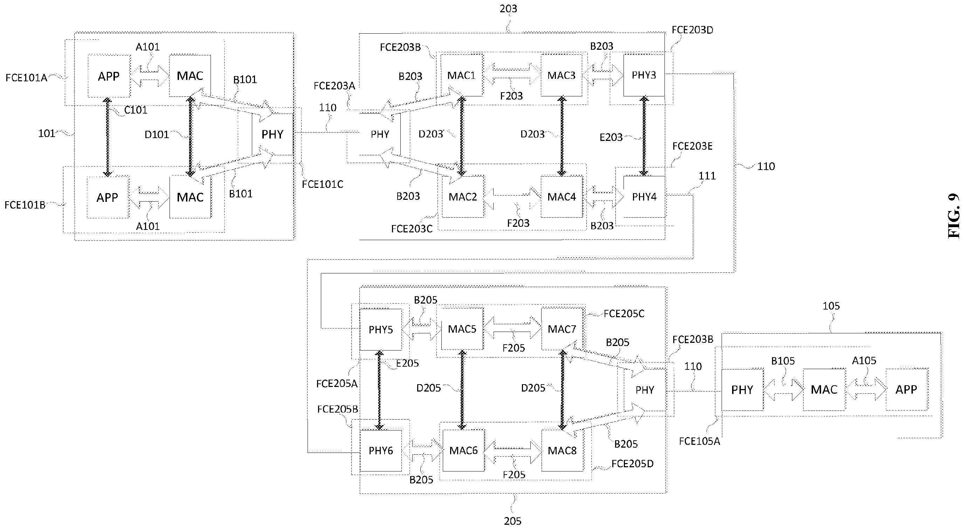

In Fig. 9 ist beispielhaft ein Ethernet Netzwerk ähnlich dem in Fig. 6 dargestellt, allerdings mit nur zwei Rechenknoten 101, 105 und zwei Sternkoppler 203, 205. Des Weiteren sind interne Details der Rechenknoten 101, 105 und der Sternkoppler 203, 205 dargestellt. Die Rechenknoten 101, 105 sind über genau eine Kommunikationsleitung 110 mit den Sternkopplern 203, 205 verbunden. Die Sternkoppler 203 und 205 sind durch zwei Kommunikationsleitungen 110, 111 miteinander verbunden.

Rechenknoten 101 definiert drei fault-containment Einheiten FCE101A, FCE101B, FCE101C, Rechenknoten 105 eine fault-containment Einheit FCE105A. Sternkoppler 203 definiert fünf fault-containment Einheiten FCE203A-FCE203E. Der Sternkoppler 205 definiert ebenfalls fünf fault-containment Einheiten FCE205A-FCE205E. Diese spezielle Art der Definition der fault-containment Einheiten und Verbindung von Rechenknoten zu den Sternkopplern hat diverse Eigenschaften, die für die Verwendung von Ethernet in sicherheits-kritischen Anwendungen von Vorteil sind:
a) Die mehrfachen Kommunikationsleitungen 110,111 müssen nur zwischen den Sternkopplern 203, 205 eingesetzt werden, was die Gesamtkosten des Systems signifikant reduziert, da Kommunikationsleitungen 111 eingespart werden können.
b) Der beliebige Ausfall einer der PHY Schichten in den Rechenknoten bedeutet, dass der Fehler eindeutig einem Rechenknoten (oder der PHY Schicht im Sternkoppler, mit dem der Rechenknoten direkt verbunden ist) zugeordnet werden kann.
c) Der beliebige Ausfall einer PHY Schicht in einem der Sternkoppler bedeutet, dass der Sternkoppler im schlimmsten Fall die Ethernet Nachrichten eines Rechenknoten verfälscht weiterleitet, nämlich genau dann, wenn jene PHY Schicht fehlerhaft wird, mir welcher der Rechenknoten direkt verbunden ist.

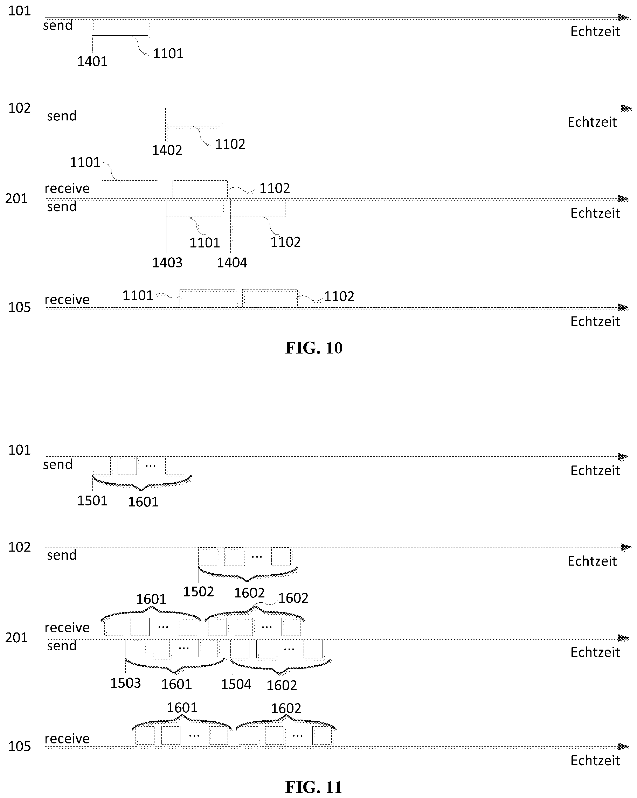

In Fig. 10 ist ein Beispiel anhand eines Flussdiagramms dargestellt, welches zeitgesteuerte Kommunikation illustriert. In dem Beispiel übertragen die Rechenknoten 101 und 102, wie in Fig. 1 dargestellt, zeitgesteuert Nachrichten 1101 und 1102 über den Sternkoppler 201 an den Rechenknoten 105. Die Besonderheit einer zeitgesteuerten Kommunikation liegt darin, dass die Sendezeitpunkte 1401, 1402 und/oder die Weiterleitungszeitpunkte 1403, 1404 der zeitgesteuerten Nachrichten bereits vor dem Versenden der Nachricht bekannt sind. Die Sendezeitpunkte 1401, 1402 und/oder die Weiterleitungszeitpunkte 1403, 1404 können zum Beispiel bereits während des Designs des verteilten Echtzeitsystems festgelegt werden. Die Festlegung der Sendezeitpunkte, Weiterleitungszeitpunkte, Empfangszeitpunkte oder eine Teilmenge davon wird als das Kommunikationsschedule bezeichnet.

In Fig. 11 ist ein weiteres Beispiel anhand eines Flussdiagramms dargestellt, welches zeitgesteuerte Kommunikation illustriert. Im Unterschied zu Fig. 10 werden in Fig. 11 einem Sendezeitpunkt 1501, 1502 und einem Weiterleitungszeitpunkt 1503, 1504 jeweils Gruppen 1601, 1602 von zeitgesteuerten Nachrichten zugeordnet. Wie in Fig. 11 dargestellt, bleibt die Zuordnung von Nachrichten zu den Gruppen 1601,1602 bestehen. Das muss allerdings nicht notwendigerweise der Fall sein, so könnte der Sternkoppler 201 auch nur den Weiterleitungszeitpunkt 1503 implementieren und, wenn der Weiterleitungszeitpunkt 1503 erreicht ist, alle Nachrichten der Gruppen 1601 und 1602 weiterleiten. Im Allgemeinen kann sich die Zuordnung von Nachricht zu einer Gruppe pro Rechenknoten und Sternkoppler beliebig neu gestalten.

Für eine Realisierung der Erfindung kann es hilfreich sein, wenn die Kommunikation der Ethernet Frames über die Kommunikationsleitungen 110, 111 zeitgesteuert erfolgt. D.h., ein Empfänger (z.B., Sternkoppler 201) der nun zeitgesteuerte Nachrichten über die Kommunikationsleitungen 110, 111 empfängt, kann davon ausgehen, dass die zusammengehörenden Nachrichten in engem zeitlichen Abstand zueinander von den Kommunikationsleitungen 110, 111 empfangen werden. Dementsprechend können die Abhängigkeiten zwischen den PHY Schichten (z.B., E201) oder den MAC Schichten (z.B., D201) oder den APP Schichten (z.B., C201) schnell entscheiden, ob die zusammengehörenden Ethernet Nachrichten ident sind oder nicht.

## Patentansprüche

1. Verfahren zur Übertragung von Nachrichten in einem Computernetzwerk, wobei das Computernetzwerk Rechenknoten (101-105) umfasst, welche Rechenkoten (101-105) über zumindest einen Sternkoppler (201) und/oder zumindest ein Multi-Hop Netzwerk (1000) miteinander verbunden sind, wobei jeder Rechenknoten (101-105) über zumindest eine Kommunikationsleitung (110) mit dem zumindest einen Sternkoppler (201) und/oder dem zumindest einen Multi-Hop Netzwerk (1000) verbunden ist, und wobei die Rechenknoten (101-105) untereinander und mit dem zumindest einen Sternkoppler (201) und/oder dem zumindest einen Multi-Hop Netzwerk (1000) Ethernet-Nachrichten austauschen, wobei
a) in einer Menge von Komponenten, welche ausgewählt sind aus jenen Komponenten, welche von dem Computernetzwerk umfasst sind, das sind Rechenknoten und/oder Sternkoppler und/oder Multi-Hop-Netzwerke, wobei die Menge zwei oder mehr solcher Komponenten umfasst, jene Komponenten der Menge, welche direkt miteinander verbunden sind, jeweils durch zwei oder mehr Kommunikationsleitungen (110, 111) direkt miteinander verbunden sind, und
b) sendende Komponenten der Menge an Komponenten zumindest einen Teil der zu versendenden Ethernet Nachrichten an zumindest zwei der zwei oder mehreren Kommunikationsleitungen (110,111) versenden,
**dadurch gekennzeichnet, dass**
c) empfangende Komponenten der Menge an Komponenten zumindest einen Teil der Ethernet Nachrichten, die über die zwei oder mehr Kommunikationsleitungen (110, 111) empfangen werden, nur dann akzeptiert und/oder weiterleitet, wenn zumindest zwei idente Nachrichten über zumindest zwei unterschiedliche Kommunikationsleitungen empfangen werden.

2. Verfahren nach Anspruch 1, **dadurch gekennzeichnet, dass** die sendenden Komponenten der Menge an Komponenten und/oder die empfangenden Komponenten der Menge an Komponenten jeweils aus zwei oder mehreren fault-containment Einheiten bestehen.

3. Verfahren nach Anspruch 2, **dadurch gekennzeichnet, dass** in den sendenden und/oder empfangenden Komponenten der Menge an Komponenten die fault-containment Einheiten derart gewählt sind, dass sich je Komponente unterschiedliche MAC Schichten in unterschiedlichen fault-containment Einheiten befinden.

4. Verfahren nach einem der Ansprüche 1 bis 3, **dadurch gekennzeichnet, dass** in den sendenden und/oder empfangenden Komponenten der zumindest einen Menge an Komponenten die fault-containment Einheiten derart gewählt sind, dass je Komponente jede MAC Schicht genau einer von zwei fault-containment Einheiten zugewiesen ist.

5. Verfahren nach einem der Ansprüche 1 bis 4, **dadurch gekennzeichnet, dass** in den sendenden Komponenten der Menge an Komponenten die fault-containment Einheiten derart gewählt sind, dass sich je Komponente unterschiedliche PHY Schichten in unterschiedlichen fault-containment Einheiten befinden.

6. Verfahren nach einem der Ansprüche 1 bis 5, **dadurch gekennzeichnet, dass** in den sendenden und/oder empfangenden Komponenten der Menge an Komponenten die fault-containment Einheiten derart gewählt sind, dass je Komponente jede PHY Schicht genau einer von zwei fault-containment Einheiten zugewiesen wird.

7. Verfahren nach einem der Ansprüche 1 bis 6, **dadurch gekennzeichnet, dass** in den sendenden und/oder empfangenden Komponenten der Menge an Komponenten die fault-containment Einheiten derart gewählt sind, dass jede MAC Schicht und/oder PHY Schicht genau einer von zwei fault-containment Einheiten zugewiesen ist.

8. Verfahren nach einem der Ansprüche 1 bis 7, **dadurch gekennzeichnet, dass** eine empfangende Komponente der Menge an Komponenten nur eine der identen Nachrichten, welche die empfangende Komponente an den zumindest zwei unterschiedlichen Kommunikationsleitungen (1110, 111) empfangen hat, weiterleitet.

9. Verfahren nach einem der Ansprüche 1 bis 8, **dadurch gekennzeichnet, dass** zumindest ein Teil der Ethernet Nachrichten zeitgesteuert von den Rechenknoten versendet wird.

10. Verfahren nach einem der Ansprüche 1 bis 9, **dadurch gekennzeichnet, dass** zumindest ein Teil der Ethernet Nachrichten zeitgesteuert von den Sternkopplern weitergeleitet wird.

11. Verfahren nach einem der Ansprüche 1 bis 10, **dadurch gekennzeichnet, dass** der SAE AS602 Standard oder ein darauf aufbauender oder nachfolgender Standard verwendet wird, um zeitgesteuert zu kommunizieren, oder der IEEE 802.1AS Standard oder ein darauf aufbauender oder nachfolgender Standard verwendet wird um zeitgesteuert zu kommunizieren. oder der IEEE 1588 Standard oder ein darauf aufbauender oder nachfolgender Standard verwendet wird um zeitgesteuert zu kommunizieren.

12. Verfahren nach einem der Ansprüche 1 bis 11, **dadurch gekennzeichnet, dass** die Komponenten der Menge an Komponenten die zwei oder mehreren Kommunikationsleitungen zu Zeitpunkten, zu denen keine gleichen Ethernet Nachrichten über zwei oder mehrere Kommunikationsleitungen übertragen werden, für die Übertragung von uriterschiedlichen Ethernet Nachrichten verwenden, wobei vorzugsweise
ein Link Aggregation Verfahren laut dem Standard IEEE 802.1AX oder einem darauf aufbauenden oder nachfolgenden Standard verwendet wird, um unterschiedliche Nachrichten über die zwei oder mehr Kommunikationsleitungen zu versenden.

13. Verfahren nach einem der Ansprüche 1 bis 12, **dadurch gekennzeichnet, dass** die Menge an Komponenten ausschließlich Sternkoppler (201),. d.h. zwei oder mehrere Sternkoppler (201) beinhaltet.

14. Verfahren nach einem der Ansprüche 1 bis 13, **dadurch gekennzeichnet, dass** die error-containment Einheiten derart gewählt sind, dass jede Komponente für sich eine error-containment Einheit bildet.

15. Verfahren nach einem der Ansprüche 1 bis 14, **dadurch gekennzeichnet, dass** die error-containment Einheiten derart gewählt sind, dass jeder Sternkoppler (201) eine error-containment Einheit bildet.

16. Verfahren nach einem der Ansprüche 1 bis 15, **dadurch gekennzeichnet, dass** die error-containment Einheiten derart gewählt sind, dass zumindest ein Rechenknoten (101-105) gemeinsam mit jeweils zumindest einem Sternkoppler (201) eine error-containment Einheit bildet, wobei vorzugsweise die error-containment Einheiten derart gewählt sind, dass jeweils genau ein Rechenknoten (101-105) gemeinsam mit genau einem Sternkoppler (201) je eine error-containment Einheit bildet.

17. Verfahren nach einem der Ansprüche 1 bis 16, **dadurch gekennzeichnet, dass** jede Komponente der Menge an Komponenten eine sendende Komponente, eine empfangende Komponente oder sowohl eine sendende als auch eine empfangende Komponente ist.

18. Computernetzwerk zur Übertragung von Nachrichten, wobei das Computernetzwerk Rechenknoten (101-105) umfasst, welche Rechenkoten (101-105) über zumindest einen Sternkoppler (201) und/oder zumindest ein Multi-Hop Netzwerk (1000) miteinander verbunden sind, wobei jeder Rechenknoten (101-105) über zumindest eine Kommunikationsleitung (110) mit dem zumindest einen Sternkoppler (201) und/oder dem zumindest einen Multi-Hop Netzwerk (1000) verbunden ist, und wobei die Rechenknoten (101-105) untereinander und mit dem zumindest einen Sternkoppler (201) und/oder dem zumindest einen Multi-Hop Netzwerk (1000) Ethernet-Nachrichten austauschen, wobei
a) in einer Menge von Komponenten, welche ausgewählt sind aus jenen Komponenten, welche von dem Computernetzwerk umfasst sind, das sind Rechenknoten und/oder Sternkoppler und/oder Multi-Hop-Netzwerke, wobei die Menge zwei oder mehr solcher Komponenten umfasst, jene Komponenten der Menge, welche direkt miteinander verbunden sind, jeweils durch zwei oder mehr Kommunikationsleitungen (110, 111) direkt miteinander verbunden sind, und
b) sendende Komponenten der Menge an Komponenten zumindest einen Teil der zu versendenden Ethernet Nachrichten an zumindest zwei der zwei oder mehreren Kommunikationsleitungen (110,111) versenden,
**dadurch gekennzeichnet, dass**
c) empfangende Komponenten der Menge an Komponenten zumindest einen Teil der Ethernet Nachrichten, die über die zwei oder mehr Kommunikationsleitungen (110, 111) empfangen werden, nur dann akzeptiert und/oder weiterleitet, wenn zumindest zwei idente Nachrichten über zumindest zwei unterschiedliche Kommunikationsleitungen empfangen werden.

19. Computernetzwerk nach Anspruch 18, **dadurch gekennzeichnet, dass** die sendenden Komponenten der Menge an Komponenten und/oder die empfangenden Komponenten der Menge an Komponenten jeweils aus zwei oder mehreren fault-containment Einheiten bestehen.

20. Computernetzwerk nach Anspruch 19 **dadurch gekennzeichnet, dass** in den sendenden und/oder empfangenden Komponenten der Menge an Komponenten die fault-containment Einheiten derart gewählt sind, dass sich je Komponente unterschiedliche MAC Schichten in unterschiedlichen fault-containment Einheiten befinden.

21. Computernetzwerk nach einem der Ansprüche 18 bis 20, **dadurch gekennzeichnet, dass** in den sendenden Komponenten der Menge an Komponenten die fault-containment Einheiten derart gewählt sind, dass sich je Komponente unterschiedliche PHY Schichten in unterschiedlichen fault-containment Einheiten befinden.

## Claims

1. A method for transmitting messages in a computer network, wherein the computer network comprises computing nodes (101-105), which computing nodes (101-105) are interconnected via at least one star coupler (201) and/or at least one multi-hop network (1000), wherein each computing node (101-105) is connected to the at least one star coupler (201) and/or the at least one multi-hop network (1000) via at least one communications line (110), and wherein the computing nodes (101-105) exchange Ethernet messages with one another and with the at least one star coupler (201) and/or the at least one multi-hop network (1000),
wherein
a) in a group of components, which are selected from those components that are comprised by the computer network, i.e. computing nodes and/or star couplers and/or multi-hop networks, wherein the group comprises two or more components of this kind, those components of the group that are directly interconnected are directly interconnected in each case by two or more communications lines (110, 111), and
b) transmitting components of the group of components transmit to at least two of the two or more communications lines (110, 111) at least some of the Ethernet messages that are to be sent,
**characterised in that**
c) receiving components of the group of components are configured to accept and/or forward at least a proportion of the Ethernet messages that is received via the two or more communications lines (110, 111) only if at least two identical messages are received via at least two different communications lines.

2. The method according to claim 1, **characterised in that** the transmitting components of the group of components and/or the receiving components of the group of components consist in each case of two or more fault-containment units.

3. The method according to claim 2, **characterised in that**, in the transmitting and/or receiving components of the group of components, the fault-containment units are selected in such a way that, for each component, different MAC layers are located in different fault-containment units.

4. The method according to any one of claims 1 to 3, **characterised in that**, in the transmitting and/or receiving components of the at least one group of components, the fault-containment units are selected in such a way that, for each component, each MAC layer is allocated to precisely one of two fault-containment units.

5. The method according to any one of claims 1 to 4, **characterised in that**, in the transmitting components of the group of components, the fault-containment units are selected in such a way that, for each component, different PHY layers are located in different fault-containment units

6. The method according to any one of claims 1 to 5, **characterised in that**, in the transmitting and/or receiving components in the group of components, the fault-containment units are selected in such a way that, for each component, each PHY layer is allocated to precisely one of two fault-containment units.

7. The method according to any one of claims 1 to 6, **characterised in that**, in the transmitting and/or receiving components in the group of components, the fault-containment units are selected in such a way that each MAC layer and/or PHY layer is allocated to precisely one of two fault-containment units.

8. The method according to any one of claims 1 to 7, **characterised in that** a receiving component in the group of components forwards only one of the identical messages received by the receiving component at the least two different communication lines (110, 111).

9. The method according to any one of claims 1 to 8, **characterised in that** at least a proportion of the Ethernet messages is sent by the computing nodes in a time-controlled manner.

10. The method according to any one of claims 1 to 9, **characterised in that** at least a proportion of the Ethernet messages is forwarded by the star couplers in a time-controlled manner.

11. The method according to any one of claims 1 to 10, **characterised in that** the SAE AS602 standard or a standard based thereon or a standard following on therefrom is used in order to communicate in a time-controlled manner, or the IEEE 802.1AS standard or a standard based thereon or a standard following on therefrom is used in order to communicate in a time-controlled manner, or the IEEE 1588 standard or a standard based thereon or a standard following on therefrom is used in order to communicate in a time-controlled manner.

12. The method according to any one of claims 1 to 11, **characterised in that** the components in the group of components use the two or more communication lines, at moments at which no identical Ethernet messages are transmitted via two or more communication lines, for the transmission of different Ethernet messages, wherein
a link aggregation method according to standard IEEE 802.1AX or a method based thereon or a standard following on therefrom is preferably used to send different messages via the two or more communication lines.

13. The method according to any one of claims 1 to 12, **characterised in that** the group of components contains exclusively star couplers (201), i.e. two or more star couplers (201).

14. The method according to any one of claims 1 to 13, **characterised in that** the error-containment units are selected in such a way that each component in itself forms an error-containment unit.

15. The method according to any one of claims 1 to 14, **characterised in that** the error-containment units are selected in such a way that each star coupler (201) forms an error-containment unit.

16. The method according to any one of claims 1 to 15, **characterised in that** the error-containment units are selected in such a way that at least one computing node (101-105) together with in each case at least one star coupler (201) forms an error-containment unit, wherein the error-containment units are preferably selected in such a way that in each case precisely one computing node (101-105) together with precisely one star coupler (201) forms an error-containment unit.

17. The method according to any one of claims 1 to 16, **characterised in that** each component in the group of components is a transmitting component, a receiving component, or both a transmitting and a receiving component.

18. A computer network for transmitting messages in a computer network, **characterised in that** the computer network comprises computing nodes, said computing nodes (101-105) being interconnected via at least one star coupler (201) and/or at least one multi-hop network (1000), wherein each computing node (101-105) is connected via at least one communication line (110) to the at least one star coupler (201) and/or the at least one multi-hop network (1000), and wherein the computing nodes (101-105) exchange Ethernet messages with one another and with the at least one star coupler (201) and/or the at least one multi-hop network (1000),
wherein
a) in a group of components selected from those components comprised by the computer network, i.e. computing nodes and/or star couplers and/or multi-hop networks, wherein the group comprises two or more components of this type, those components within the group that are directly interconnected are directly interconnected in each case by two or more communication lines (110, 111), and
b) transmitting components of the group of components are configured to send to at least two of the two or more communication lines (110, 111) at least a proportion of the Ethernet messages that are to be sent,
**characterised in that**
c) receiving components in the group of components are configured to accept and/or forward at least a proportion of the Ethernet messages received via the two or more communication lines (110, 111) only if at least two identical messages are received via at least two different communication lines.

19. The computer network according to claim 18, **characterised in that** the transmitting components in the group of components and/or the receiving components in the group of components consist in each case of two or more fault-containment units.

20. The computer network according to claim 19, **characterised in that**, in the transmitting and/or receiving components in the group of components, the fault-containment units are selected in such a way that, for each component, different MAC layers are located in different fault-containment units.

21. The computer network according to any one of claims 18 to 20, **characterised in that**, in the transmitting and/or receiving components of the group of components, the fault-containment units are selected in such a way that, for each component, different PHY layers are located in different fault-containment units.

## Revendications

1. Procédé de transmission de messages dans un réseau d'ordinateurs, dans lequel le réseau d'ordinateurs comprend des noeuds de calcul (101-105), lesquels noeuds de calcul (101-105) sont connectés entre eux par l'intermédiaire d'au moins un coupleur en étoile (201) et/ou d'au moins un réseau à sauts multiples (1000), dans lequel chaque noeud de calcul (101-105) est connecté par l'intermédiaire d'au moins une ligne de communication (110) à l'au moins un coupleur en étoile (201) et/ou à l'au moins un réseau à sauts multiples (1000), et dans lequel les noeuds de calcul (101-105) échangent des messages Ethernet entre eux et avec l'au moins un coupleur en étoile (201) et/ou l'au moins un réseau à sauts multiples (1000),
dans lequel
a) dans un ensemble de composants, lesquels sont choisis parmi les composants qui sont englobés par le réseau d'ordinateurs, à savoir des noeuds de calcul et/ou des coupleurs en étoile et/ou des réseaux à sauts multiples, dans lequel l'ensemble comporte au moins deux tels composants, les composants de l'ensemble, qui sont connectés entre eux directement, sont connectés entre eux directement à chaque fois par l'intermédiaire d'au moins deux lignes de communication (110, 111), et
b) des composants émetteurs de l'ensemble de composants envoient au moins une partie des messages Ethernet à envoyer sur au moins deux des au moins deux lignes de communication (110, 111),
**caractérisé par le fait que**
c) des composants récepteurs de l'ensemble de composants acceptent et/ou transfèrent ensuite au moins une partie des messages Ethernet qui sont reçus par l'intermédiaire des au moins deux lignes de communication (110, 111), seulement si au moins deux messages identiques sont reçus par l'intermédiaire d'au moins deux lignes de communication différentes.

2. Procédé selon la revendication 1, **caractérisé par le fait que** les composants émetteurs de l'ensemble de composants et/ou les composants récepteurs de l'ensemble de composants sont constitués à chaque fois d'au moins deux unités de confinement des pannes.

3. Procédé selon la revendication 2, **caractérisé par le fait que,** dans les composants émetteurs et/ou récepteurs de l'ensemble de composants, les unités de confinement des pannes sont choisies de telle sorte que, pour chaque composant, des couches MAC différentes se trouvent dans des unités de confinement des pannes différentes.

4. Procédé selon l'une des revendications 1 à 3, **caractérisé par le fait que,** dans les composants émetteurs et/ou récepteurs de l'au moins un ensemble de composants, les unités de confinement des pannes sont choisies de telle sorte que, pour chaque composant, chaque couche MAC est affectée à exactement une de deux unités de confinement des pannes.

5. Procédé selon l'une des revendications 1 à 4, **caractérisé par le fait que,** dans les composants émetteurs de l'ensemble de composants, les unités de confinement des pannes sont choisies de telle sorte que, pour chaque composant, des couches PHY différentes se trouvent dans des unités de confinement des pannes différentes.

6. Procédé selon l'une des revendications 1 à 5, **caractérisé par le fait que,** dans les composants émetteurs et/ou récepteurs de l'ensemble de composants, les unités de confinement des pannes sont choisies de telle sorte que, pour chaque composant, chaque couche PHY est affectée à exactement une de deux unités de confinement des pannes.

7. Procédé selon l'une des revendications 1 à 6, **caractérisé par le fait que,** dans les composants émetteurs et/ou récepteurs de l'ensemble de composants, les unités de confinement des pannes sont choisies de telle sorte que chaque couche MAC et/ou couche PHY est affectée à exactement une de deux unités de confinement des pannes.

8. Procédé selon l'une des revendications 1 à 7, **caractérisé par le fait qu'**un composant récepteur de l'ensemble de composants transfère seulement l'un des messages identiques que le composant récepteur a reçus sur les au moins deux lignes de communication différentes (110, 111).

9. Procédé selon l'une des revendications 1 à 8, **caractérisé par le fait qu'**au moins une partie des messages Ethernet est envoyée par les noeuds de calcul d'une manière commandée dans le temps.

10. Procédé selon l'une des revendications 1 à 9, **caractérisé par le fait qu'**au moins une partie des messages Ethernet est transférée par les coupleurs en étoile d'une manière commandée dans le temps.

11. Procédé selon l'une des revendications 1 à 10, **caractérisé par le fait que** la norme SAE AS602 ou une norme basée sur celle-ci ou une norme subséquente à celle-ci est utilisée pour communiquer d'une manière commandée dans le temps, ou la norme IEEE 802.1AS ou une norme basée sur celle-ci ou une norme subséquente à celle-ci est utilisée pour communiquer d'une manière commandée dans le temps ou la norme IEEE 1588 ou une norme basée sur celle-ci ou une norme subséquente à celle-ci est utilisée pour communiquer d'une manière commandée dans le temps.

12. Procédé selon l'une des revendications 1 à 11, **caractérisé par le fait que** les composants de l'ensemble de composants utilisent les au moins deux lignes de communication à des moments auxquels aucuns messages Ethernet identiques ne sont transmis par l'intermédiaire d'au moins deux lignes de communication, pour la transmission de messages Ethernet différents, dans lequel, de préférence
une méthode d'agrégation de liaisons selon la norme IEEE 802.1AX ou une norme basée sur celle-ci ou une norme subséquente à celle-ci est utilisée pour envoyer des messages différents par l'intermédiaire des au moins deux lignes de communication.

13. Procédé selon l'une des revendications 1 à 12, **caractérisé par le fait que** l'ensemble de composants contient exclusivement des coupleurs en étoile (201), à savoir au moins deux coupleurs en étoile (201).

14. Procédé selon l'une des revendications 1 à 13, **caractérisé par le fait que** les unités de confinement des pannes sont choisies de telle sorte que chaque composant en lui-même forme une unité de confinement des pannes.

15. Procédé selon l'une des revendications 1 à 14, **caractérisé par le fait que** les unités de confinement des pannes sont choisies de telle sorte que chaque coupleur en étoile (201) forme une unité de confinement des pannes.

16. Procédé selon l'une des revendications 1 à 15, **caractérisé par le fait que** les unités de confinement des pannes sont choisies de telle sorte qu'au moins un noeud de calcul (101-105) conjointement avec à chaque fois au moins un coupleur en étoile (201) forment une unité de confinement des pannes, dans lequel, de préférence, les unités de confinement des pannes sont choisies de telle sorte qu'à chaque fois exactement un noeud de calcul (101-105) conjointement avec exactement un coupleur en étoile (201) forment une unité de confinement des pannes.

17. Procédé selon l'une des revendications 1 à 16, **caractérisé par le fait que** chaque composant de l'ensemble de composants est un composant émetteur, un composant récepteur ou à la fois un composant émetteur et un composant récepteur.

18. Réseau d'ordinateurs pour la transmission de messages, dans lequel le réseau d'ordinateurs comprend des noeuds de calcul (101-105), lesquels noeuds de calcul (101-105) sont connectés entre eux par l'intermédiaire d'au moins un coupleur en étoile (201) et/ou d'au moins un réseau à sauts multiples (1000), dans lequel chaque noeud de calcul (101-105) est connecté à l'au moins un coupleur en étoile (201) et/ou à l'au moins un réseau à sauts multiples (1000) par l'intermédiaire d'au moins une ligne de communication (110), et dans lequel les noeuds de calcul (101-105) échangent des messages Ethernet entre eux et avec l'au moins un coupleur en étoile (201) et/ou l'au moins un réseau à sauts multiples (1000),
dans lequel
a) dans un ensemble de composants, lesquels sont choisis parmi les composants qui sont englobés par le réseau d'ordinateurs, à savoir des noeuds de calcul et/ou des coupleurs en étoile et/ou des réseaux à sauts multiples, dans lequel l'ensemble comprend au moins deux tels composants, les composants de l'ensemble, lesquels sont connectés entre eux directement, sont connectés entre eux directement à chaque fois par l'intermédiaire d'au moins deux lignes de communication (110, 111), et
b) des composants émetteurs de l'ensemble de composants envoient au moins une partie des messages Ethernet à envoyer sur au moins deux des au moins deux lignes de communication (110, 111),
**caractérisé par le fait que**
c) des composants récepteurs de l'ensemble de composants acceptent et/ou transfèrent ensuite au moins une partie des messages Ethernet qui sont reçus par l'intermédiaire des au moins deux lignes de communication (110, 111), seulement si au moins deux messages identiques sont reçus par l'intermédiaire d'au moins deux lignes de communication différentes.

19. Réseau d'ordinateurs selon la revendication 18, **caractérisé par le fait que** les composants émetteurs de l'ensemble de composants et/ou les composants récepteurs de l'ensemble de composants sont constitués à chaque fois d'au moins deux unités de confinement des pannes.

20. Réseau d'ordinateurs selon la revendication 19,
**caractérisé par le fait que**
dans les composants émetteurs et/ou récepteurs de l'ensemble de composants, les unités de confinement des erreurs sont choisies de telle sorte que, pour chaque composant, des couches MAC différentes se trouvent dans des unités de confinement des pannes différentes.

21. Réseau d'ordinateurs selon l'une des revendications 18 à 20, **caractérisé par le fait que,** dans les composants émetteurs de l'ensemble de composants, les unités de confinement des pannes sont choisies de telle sorte que, pour chaque composant, des couches PHY différentes se trouvent dans des unités de confinement des pannes différentes.
